# EUROPEAN PATENT APPLICATION

(11) **EP 2 339 434 A2**
(43) Date of publication of application: **29.06.2011**
(21) Application number: 09810147.0
(22) Date of filing: 13.08.2009
(51) Int. Cl.: G06F 3/041

(54) **TOUCH-SENSING PANEL INCLUDING ELECTRODE-INTEGRATED WINDOW, AND MANUFACTURING METHOD THEREOF**

(30) Priority: 27.08.2008 KR 20080083724
(71) Applicant: Melfas, Seoul 153-777 (KR)
(72) Inventor: MIN, Dong Jin, Seoul 151-772 (KR)
(74) Representative: pronovem
(86) International application number: PCT/KR2009/004519
(87) International publication number: WO 2010/024542

(57) **Abstract**

The present invention relates to a touch-sensing panel including an electrode-integrated window, and a manufacturing method thereof. The disclosed touch-sensing panel includes a transparent window and a wiring unit. A sensing electrode is formed in a certain pattern on one surface of the transparent window, and the transparent window allows touching on the opposite surface to the plane where the sensing electrode is formed. The wiring unit is connected to the sensing electrode, and the sensing electrode is integrated with the transparent window. According to the invention, the transparent window is used where the sensing electrode is integrated with the one surface so that the manufacturing processes may be simplified and the yield may be increased.

## Description

### Technical Field

The present invention relates to a touch-sensing panel including an electrode-integrated window and a manufacturing method thereof, and more particularly, to a touch-sensing panel including a transparent window that is to be applied to a display device of an electrical device and that has a sensing electrode directly patterned to the transparent window, and a manufacturing method thereof.

### Background Art

As various types of electrical devices have been developed, various technologies for minimizing a size of an electrical device and enlarging a display have been suggested. As the size of the electrical device has been minimized, the number of electrical devices recognizing a user input inputted via a touch input device have increased. Particularly, various electrical devices adopt a touch-sensing panel including a function of inputting inputs on a display, due to the tendency that the display is becoming larger.

The touch-sensing panel may be classified as a resistive film scheme, a capacitive scheme, an ultrasonic scheme, an infrared ray scheme, and the like, based on an operation type. The capacitive scheme has a thin touch-sensing panel, has high durability, and allows multi-touches and thus, may be used for various electrical devices.

The touch-sensing panel based on a conventional capacitive scheme may be made of polyethylene terephthalate (PET) and the like, and may be manufactured by a process of attaching a separate substrate including a sensing electrode on one surface, to a transparent window, using an adhesive layer, for example, OCA and the like. The conventional process may introduce various defects, for example, bubbles, scratches, foreign debris, and the like. The conventional process is an expensive process, and further, a unit cost of the touch-sensing panel may increase since the production yield of the touch-sensing panel may decrease due to a high defect rate of the conventional process. When an additional process for pre-processing the transparent window to reduce the defect rate is included, the additional process may also increase the unit price of the touch-sensing panel.

### Disclosure

### Technical Goals

An aspect of the present invention provides a touch-sensing panel including an electrode-integrated window, and a manufacturing method thereof, that may form a sensing electrode to be integrally formed with the transparent window by patterning a conductive material on one surface of the transparent window, and may connect the sensing electrode to a wiring unit to receive a touch received by the transparent window and thus, may simplify a manufacturing process and may increase a yield.

### Technical solutions

According to an aspect of the present invention, there is provided a touch-sensing panel, the panel including a transparent window including a sensing electrode formed in a predetermined pattern on one surface of the transparent window and receiving a touch via an opposite surface of the one surface, and a wiring unit being connected to the sensing electrode, and the sensing electrode is integrally formed with the transparent window.

According to an aspect of the present invention, there is provided a touch-sensing panel manufacturing method, the method including patterning a sensing electrode on one surface of a transparent window, forming a wiring unit to be connected to the sensing electrode, and forming a sheet layer on at least one area of a surface opposite to the one surface of the transparent window.

Additional aspects, features, and/or advantages of the invention will be set forth in part in the description which follows and, in part, will be apparent from the description, or may be learned by practice of the invention.

### Effects

According to the present invention, a sensing electrode is directly patterned on one surface of a transparent window to be integrally formed with the transparent window, and the sensing electrode is connected to a wiring unit to sense a touch received by the transparent window. Accordingly, an attaching process having a high defect rate may be omitted from a touch-sensing panel manufacturing process, and the manufacturing process may be simplified and thus, a yield may increase, a unit cost may decrease, and an electrical device including the touch-sensing panel may be slimmed down.

### Brief Description of Drawings

FIG. 1 is a diagram illustrating a touch-sensing panel according to an embodiment of the present invention;
FIGS. 2 and 3 are diagrams illustrating a cross sectional view of the touch-sensing panel of FIG. 1 viewed from an A-A' direction;
FIG. 4 is a diagram illustrating a touch sensing apparatus including a touch-sensing panel according to an embodiment of the present invention; and
FIG. 5 is a flowchart illustrating a manufacturing method of a touch-sensing panel according to an embodiment of the present invention.

### Best Mode for Carrying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

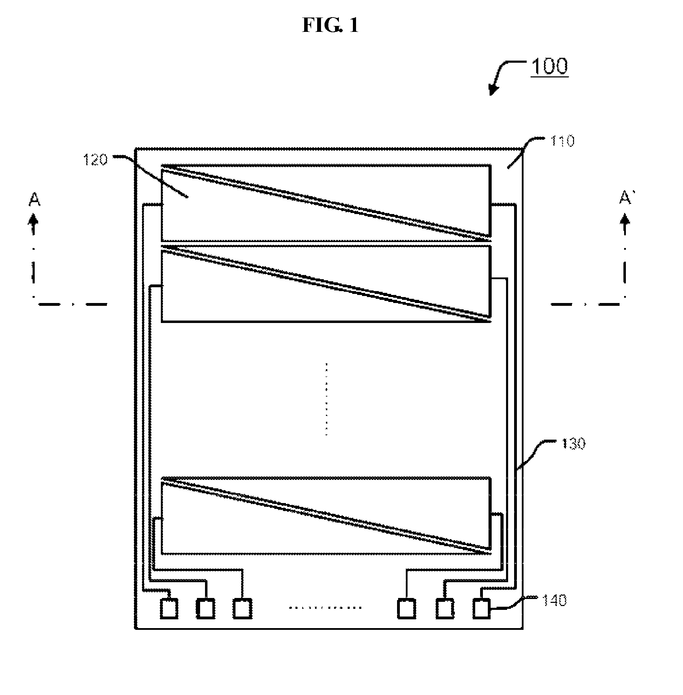

FIG. 1 illustrates a touch-sensing panel 100 according to an embodiment of the present invention. The touch-sensing panel may be applicable to portable electrical devices, for example, a mobile communication terminal, a personal digital assistant (PDA), a notebook computer, a navigation device, a portable media player (PMP), a portable game device, and the like, may be applicable to general electrical devices, such as, a remote controller, a TV, a refrigerator, a washing machine, a desktop computer, a DVD player, and the like, and may be applicable to industrial or medical electrical devices.

Referring to FIG. 1, the touch-sensing panel 100 may include a transparent window 110, a sensing electrode 120 that is patterned in a predetermined shape on one surface of the transparent window 110 and that is integrally formed with the transparent window 110, a wiring unit 130 that is connected to the sensing electrode 120, a connecting pad 140 that is connected to the wiring unit 130 and that transmits a sensing signal to a controller (not illustrated), and the like.

The transparent window 110 may be made of high strength materials, for example, glass with a high transmittance and an acrylic resin, or materials applicable to a flexible display and the like, for example, polyethylene terephthalate (PET), polycarbonate (PC), polyether sulfone (PES), polyimide (PI), PolyMethly MethaAcrylate (PMMA), and the like. The transparent window 110 may maintain an external form of an input unit of the touch-sensing panel 100, and at least one area of the transparent window 110 is exposed to an outside to receive a touch of a conductive material, such as, a human body, a stylus pen, and the like. In this example, the transparent window 110 may selectively include a protective layer (not illustrated) to prevent damage or destruction of the transparent window 110. The 'touch' used throughout the present specification may include a direct touch to a touch receiving surface and may further include that a conductive object approaches within a predetermined distance from the touch receiving surface. Accordingly, a touch-sensing panel and a touch input sensing apparatus including the touch-sensing panel according to the example embodiments may be understood as a panel or apparatus that recognizes a touch of the conductive object and recognizes approach of the conductive object within the predetermined distance.

When an object, for example, a human body, a stylus pen, and the like, touches the transparent window 110, the object and the sensing electrode 120 may act as electrodes and the transparent window 110 may act as a dielectric substance and thus, a predetermined capacitance change may occur. The capacitance change may be measured by the controller that is connected to the sensing electrode 120 via the wiring unit 130, and the controller may determine, based on the measured capacitance change, whether a touch occurs, a number of touch inputs, a location of a touch, and the like.

The sensing electrode 120 may be an electrode formed on one surface of the transparent window 110, and may be made of a material having a high transmittance and excellent conductivity, for example, indium-tin oxide (ITO), indium zinc oxide (IZO), zinc oxide (ZnO), and the like. The sensing electrode 120 may be used as a conductive plate that generates a capacitance change based on a touch of a human body and the like, and may be patterned in a predetermined shape to accurately determine the number of touch inputs on the transparent window 110 and the location of the touch. Although the sensing electrode 120 is assumed to be patterned in a right-angled triangle on the touch-sensing panel 100 of FIG. 1, the sensing electrode 120 may be patterned in various shapes appropriate for determining the location of the touch and the like.

The sensing electrode 120 may be formed on one surface of the transparent window 110 to be integral with the transparent window 110. When the touch-sensing panel 100 is manufactured by directly patterning the sensing electrode 120 on the transparent window 110 and connecting the sensing electrode 120 to the wiring unit 130, a process, for example, a lamination process, of forming the sensing electrode 120 on a separate substrate and attaching the sensing electrode 120 to the transparent window 110, using an adhesive material, for example, OCA and the like, may be omitted. A process of patterning an ITO-formed surface that is made of an ITO film and that is formed on one surface of a polyethylene terephtalete (PET) and the like, and attaching the patterned ITO film to a transparent window, for example, acryl and the like, may be omitted and thus, a factor causing a defect during the attaching process may be mitigated and a yield of the process may significantly increase. Therefore, 'being integral' or 'being integrally formed' used throughout the specification may indicate that the sensing electrode 120 is directly formed on one surface of the transparent window 110 without a separate adhesive layer, for example, OCA and the like.

For example, an ITO coated glass including at least one surface coated with ITO may be applicable to the touch-sensing panel 100. In this example, ITO coated on the glass substrate may be patterned to form the sensing electrode 120, and the glass substrate may be utilized as the transparent window 110 and thus, a process of attaching the patterned ITO film to a separate window may be omitted. Accordingly, the yield of a process of manufacturing the touch-sensing panel 100 may increase, and at the same time, a thickness of the touch-sensing panel 100 may decrease.

The sensing electrode 120 that is integrally formed with the transparent window 110 may be connected to the wiring unit 130. The wiring unit 130 may be made of a metallic material, for example, copper (Cu), silver (Ag), molybdenum (Mo), and the like, or with a transparent conductive material that is the same as or similar to the material of the sensing electrode 120, such as ITO. The wiring unit 130 may be formed by an etching scheme and the like in the same manner as the sensing electrode 120. In this example, a sequence of the process of forming the sensing electrode 120 and the process of forming the wiring unit 130 may be selectively determined based on characteristics of the processes. When the wiring unit 130 is formed by printing a conductive paste including Ag based on a silk screen scheme and the like, the sensing electrode 120 may be formed before the wiring unit 130 is formed.

The wiring unit 130 may be connected to the connecting pad 140 formed on at least one end of the touch-sensing panel 100, and may transmit, to the controller connected to the connecting pad 140, a touch sensing signal generated from the sensing electrode 120. When a predetermined capacitance is generated between the sensing electrode 120 and the object that touches the transparent window 110, the capacitance may be sensed by the controller via the wiring unit 130 connected to the sensing electrode 120 and thus, the number of touch inputs, the location of the touch, and the like may be determined.

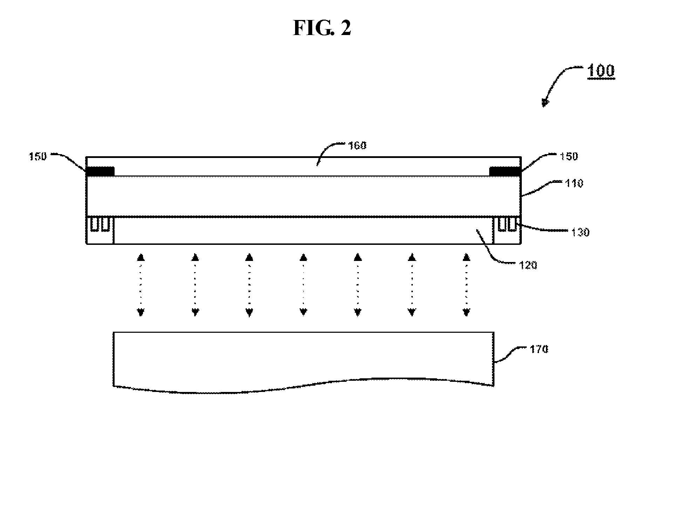

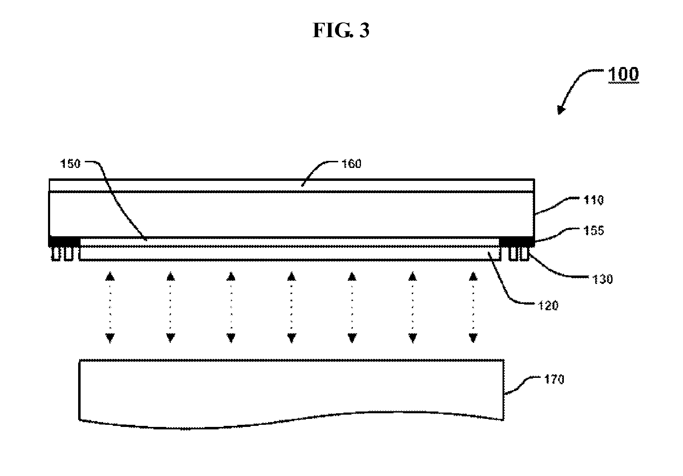

FIGS. 2 and 3 illustrate a cross sectional view of the touch-sensing panel 100 of FIG. 1 viewed from an A-A' direction. Referring to FIGS. 2 and 3, the touch-sensing panel 100 may include the transparent window 110, the sensing electrode 120 that is integrally formed with the transparent window 110 by being patterned in a predetermined shape on one surface of the transparent window 110, the wiring unit 130 that is connected to the sensing electrode 120, and a sheet layer 150.

Referring to FIG. 2, the sensing electrode 120 may be formed on a bottom surface of the transparent window 110 to be integral with the transparent window 110, and the sheet layer 150 and the protective layer 160 may be formed on a top surface of the transparent window 110. According to another embodiment of the present invention, the sensing electrode 120 may be formed on both the top surface and the bottom surface of the transparent window 120 and the sensing electrode 120 formed on the top surface may be used for sensing approach of an object and the like. Also, both the sheet layer 150 and the sensing electrode 120 may be formed on the bottom surface of the transparent window 110 as illustrated in FIG. 3.

'Being integral' or 'being integrally formed' used throughout the specification may indicate that the sensing electrode 120 is directly formed on the transparent window 110 based on a sputtering scheme, an ion plating scheme, and an etching scheme, instead of a process of forming a sensing electrode on a separate element in a form of an ITP film and attaching the sensing electrode to a transparent window. The terms may indicate a method excluding the attaching process that attaches the sensing electrode to the transparent window. 'Directly' forming of the sensing electrode 120 on the transparent window 110 may indicate that the sensing electrode 120 is directly patterned to one exposed surface of the transparent window 110 and may indicate that the sensing electrode 120 is formed on one surface of the transparent window 110 having a separately coated layer, for example, a scattering prevention film, a transparent resin, and the like.

Referring to FIGS. 2 and 3, the touch-sensing panel 100 may be installed on a top of a display device 170 of an electrical device. The display device 170 connected to the touch-sensing panel 100 may be a liquid crystal display (LCD), an organic light emitting device (OLED), a plasma display panel (PDP), and the like. In this example, a shield layer may be selectively arranged between the touch-sensing panel 100 and the display device 170, to prevent a defect occurring in the touch-sensing panel 100, which may be caused when a noise component generated while the display device 170 operates is transmitted to the touch-sensing panel 100.

An electrical device including the touch-sensing panel 100 may be thicker than an electrical device excluding the touch-sensing panel 100, since the touch-sensing panel 100 is placed on the display device 170. Therefore, when the sensing electrode 120 is integrally formed on one surface of the transparent window 110, a substrate where the sensing electrode 120 is formed based on a conventional process and an adhesive layer may not be used and thus, the electrical device including the touch-sensing panel 100 may be thinned, which satisfies a demand from design aspects.

The transparent window 110 may include the sensing electrode 120 integrally formed on one surface of the transparent window 110. For example, an ITO coated glass may be used as the transparent window 110. Referring to FIG. 2, the sensing electrode 120 may be integrally formed on one surface facing the top surface that receives a touch, that is, the bottom surface of the transparent window 110 and thus, a capacitance may be generated between the sensing electrode 120 and an object that touches the transparent window 110. Referring to FIG. 3, the sheet layer 150 may be attached to the bottom surface of the transparent window 110, and the sensing electrode 120 may be integrally formed on the sheet layer 150 and thus, the touch-sensing panel 100 excluding a separate adhesive layer may be embodied.

The sensing electrode 120 may be patterned in a predetermined shape and thus, may generate a capacitance change in response to a touch received by the transparent window 110. For example, the sensing electrode 120 may be formed by a sputtering scheme, an ion plating scheme, and an etching scheme, and the like.

A material of the sensing electrode 120, that is, a conductive material, for example, ITO, IZO, and ZnO, may be arranged based on the sputtering scheme or the ion plating scheme, and the sensing electrode 120 may be patterned by etching the arranged material in a desired shape. The sensing electrode 120 may be patterned in various shapes, for example, a diamond, a rectangle, a hive, and the like, in addition to the right-angled triangle of FIG. 1.

The sheet layer 150 may include a layer that visually shields a partial area of the transparent window 110 where the wiring unit 130 is arranged, or may include a layer formed for decoration of the transparent window 110. The sheet layer 150 may be placed on a surface of the transparent window 110 based on a printing scheme, a metalizing scheme, a sputtering scheme, a coating scheme, and the like, or may be processed inside the transparent window 110 based on an in-mold process. When the sheet layer 150 is formed on the transparent window 110, the sheet layer 150 may be arranged in an opposite surface of the surface where the sensing electrode 120 is arranged as illustrated in FIG. 2, or may be arranged in the same surface where the sensing electrode 120 is arranged as illustrated in FIG. 3.

The sheet layer 150 may include a shielding area that is arranged outside the transparent window 110 to prevent the wiring unit 130 from being visually exposed to outside and that visually shields the wiring unit 130, or may provide a decoration effect to the transparent window 110. The sheet layer 150 may be arranged outside the transparent window 110 where the wiring unit 130 is arranged as illustrated in FIG. 2. In this example, when the sheet layer 150 is made of an opaque material, the wiring unit 130 of metallic material may be prevented from being visually exposed to the outside. Therefore, the sheet layer 150 may be formed in an area where the sheet layer 150 is able to visually shield the wiring unit 130 from the outside, and at the same time, does not invade an effective display area of the touch-sensing panel 100 where the sensing electrode 120 is arranged.

Referring to FIG. 3, the wiring unit 130 may be visually shielded by arranging the sheet layer 150 including a shielding area 155 in the bottom surface of the transparent window 110. In this example, the sheet layer 150 may be transparent or may provide a predetermined decoration effect in an area corresponding to the sensing electrode 120, and may include an opaque material in an area corresponding to the wiring unit 130, to prevent the wiring unit 130 from being visually exposed.

When the sheet layer 150 is placed on the bottom surface of the transparent window 110, and the sensing electrode 120 is directly formed on the sheet layer 150 as illustrated in FIG. 3, the sheet layer 150 may be made of a material having an excellent heat-resistant property. When the material having the excellent heat-resistant property is used, the transparent window 110 may be prevented from being deformed due to heat or pressure generated from an ACF process that attaches a circuit substrate including a controller chip for sensing a touch.

When the transparent window 110 made of an acryl material is used, the transparent window 110 may melt during the ACF process performed at a high temperature. Accordingly, when the sheet layer 150 made of the excellent heat-resistant property is used, the transparent window 110 made of the acrylic material may be prevented from being damaged. When the transparent window 110 made of tempered glass is used, the tempered glass may lose a property of the tempered glass during the ACF process. In this example, when the sheet layer 150 made of the excellent heat-resistant property is used, the transparent window 110 made of the acrylic material may be prevented from being damaged.

The protective layer 160 may be a layer that protects the transparent window 110 from an external impact, a scratch, and the like, and may be selectively attached to the transparent window 110. At least one area of the transparent window 110 may be exposed to an outside to receive a touch and thus, the at least one area of the transparent window 110 may be scratched or may be damaged by an impact. Therefore, the protective layer 160 may be formed on the at least one area of the transparent window 110 exposed to the outside to protect the transparent window 110 and thus, may prevent a phenomenon that a touch is not accurately determined due to the scratch or the damage of the transparent window 110.

The sheet layer 150 is separately formed on the top surface of the transparent window 110, and the protective layer 160 may be formed by attaching a transparent protective film to cover an area where the sheet layer 150 is formed and the effective display area of the touch-sensing panel 100. For another example, the protective film attached to the top surface of the transparent window 110 may be processed based on a predetermined process to enable the protective film to be used as the sheet layer 150, and the processed protective film may be attached to the transparent window 110 and the protective film may be used as the protective layer 160. Therefore, a manufacturing process of the touch-sensing panel 100 may be simplified. When the transparent window 110 is made of a material such as the tempered glass, the protective film may be a scattering prevention film that is generally attached to the tempered glass.

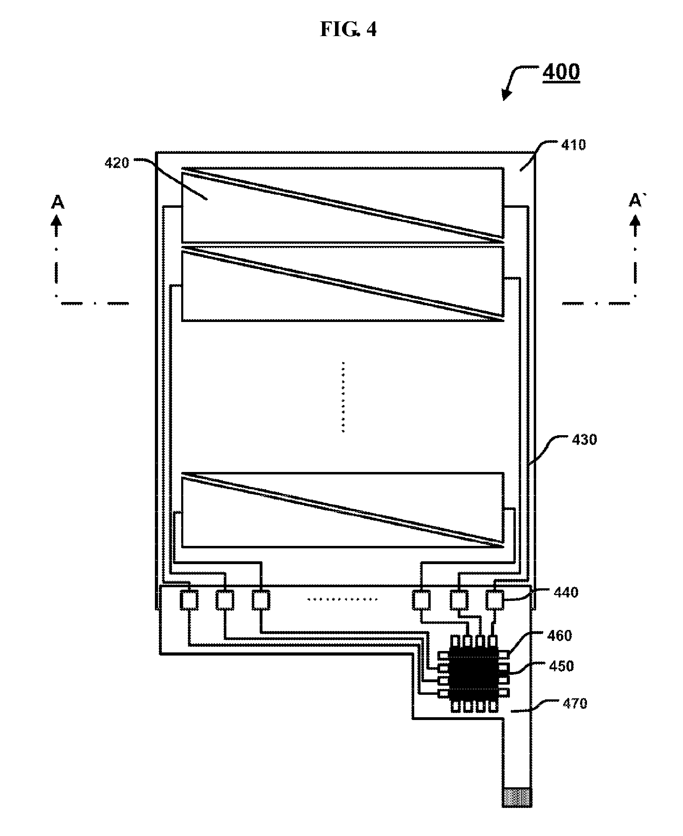

FIG. 4 illustrates a touch sensing apparatus 400 including a touch-sensing panel according to an embodiment of the present invention.

The touch sensing apparatus 400 may include the touch-sensing panel 100 of FIG. 1 and a controller 450 that is connected to a sensing electrode 420 via a connecting pad 440 and a wiring unit 430 and that senses a capacitance generated by the sensing electrode 420 in response to a touch. The controller 450 may be contained in a circuit substrate 470 that is attached to the touch-sensing panel 100 via the connecting pad 440, and the connecting pad 440 connected to each sensing electrode 420 may be connected to each sensing channel 460 of the controller 450 via a circuit pattern of the circuit substrate 470.

The touch-sensing panel 100 that has the same configuration as the touch-sensing panel illustrated in FIG. 1 and 2 may include a transparent window 410, the sensing electrode 420, the wiring unit 430, and the connecting pad 440. The transparent window 410 may be made of a material having a high transmittance, and the sensing electrode 420 may be directly formed on one surface of the transparent window 410. The sensing electrode 420 may be directly patterned in a predetermined shape on one surface of the transparent window 410, instead of a process of forming the sensing electrode 420 on a separate substrate and attaching the separate substrate to the transparent window 410 through an adhesive process, and thus, the adhesive process, such as a lamination process, may be omitted.

The controller 450 may include an analog circuit or a digital circuit, and may determine whether a touch occurs, a location of the touch, and the like. For example, when a touch is provided to at least one area of the transparent window 410, a sensing signal generated from the sensing electrode 420 that is arranged in an area corresponding to the location of the touch may be transmitted to the controller 450. The sensing signal may include a capacitance change generated when the touch occurs, and may be transmitted to the controller 450 via the wiring unit 430 and the connecting pad 440.

The sensing signal may be received by a sensing channel 460 of the controller 450. The sensing channel 460 may be a separate channel that is connected to the sensing electrode 420 to receive the sensing signal. In general, a single sensing electrode may be connected to a single sensing channel. Depending on embodiments, a plurality of sensing electrodes may be connected to a single sensing channel. For example, even though a number of sensing electrodes increases as a size of the touch-sensing panel 100 increases, the single controller 450 may determine a touch by connecting the sensing electrodes arranged at intervals to a single sensing channel without increasing the number of sensing channels.

The controller 450 may be contained in the circuit substrate 470 and may be connected to the touch-sensing panel 100. A flexible printed circuit board (FPCB) may be used as the circuit substrate 470, to cope with various internal shapes of an electronic device, and a circuit pattern formed in the circuit substrate 470 may be connected to the connecting pad 440 to connect the wiring unit 430 of the touch-sensing panel 100 to the sensing channel 460 of the controller 450. The controller 450 may be contained in the circuit substrate 470 to receive a sensing signal via the sensing channel 460, and may determine, based on the received sensing signal, whether a touch occurs, a location of the touch, and the like.

The circuit substrate 470 that contains the controller 450 may be connected to the transparent window 410 of the touch-sensing panel 100. For example, the circuit pattern formed on the circuit substrate 470 may be connected to connecting pad 440 placed on one end of the transparent window 410 as illustrated in FIG. 4, and the circuit pattern may be electrically connected to the connecting pad 440, using an anisotropic conductive film (ACF), an anisotropic conductive paste (ACP), and the like.

A process that electrically connects the connecting pad 440 to the controller 450 may be performed by arranging the ACF or the ACP between the transparent window 410 and the circuit substrate 470, and performing thermo-compression with respect to an area where the ACF or the ACP is arranged. In this example, when the transparent window 410 is made of an acrylic material, the transparent window 410 may be deformed during the thermo-compression. Accordingly, to prevent the deformation, a coating process may be separately performed with respect to the transparent window 410 and the sensing electrode 420 may be formed on the coating, or a layer having an excellent heat-resistant property may be separately attached to the transparent window 410 and the sensing electrode 420 may be formed on the layer.

When the transparent window 410 of the touch sensing apparatus 400 of FIG. 4 receives a touch, a sensing signal may be generated in the sensing electrode 420 in response to the touch. The sensing signal may include a capacitance change occurring when the touch occurs. The transparent window 410 may have a uniform thickness to generate a capacitance that allows accurate determination of the location of the touch, a pressure of the touch, and the like.

The capacitance formed between the sensing electrode 420 and an object that touches a touch surface and forms a predetermined touch area on the touch surface may be proportional to a size of the touch area. Accordingly, as the touch area that the sensing electrode 420 overlaps is larger, a stronger sensing signal may be generated by the sensing electrode 420. A capacitance occurring when an object approaches the transparent window 410 may be proportional to a distance between the object and the transparent window 410. Accordingly, as the object becomes closer to the transparent window 410, a sensing signal that may be generated by the sensing electrode 420 becomes stronger.

The sensing signal generated by the touch may be transmitted to the circuit substrate 470 that contains the controller 450, via the wiring unit 430 and the connecting pad 440 that are electrically connected to the sensing electrode 420. The circuit pattern of the circuit substrate 470 may be connected to the connecting pad 440 of the touch-sensing panel 100 and may transmit the sensing signal generated by the sensing electrode 420 to the controller 450. In this example, the controller 450 may receive sensing signals via a plurality of sensing channels. The sensing channels may be connected one-to-one to sensing electrodes and each of the sensing channels may receive a sensing signal generated from a corresponding sensing electrode.

The controller 450 may determine, based on the sensing signal, whether a touch occurs, a location of the touch, and the like. For example, the controller 450 may compare a strength of the sensing signal received via the sensing channel 460 with a predetermined threshold, and it is determined that the touch occurs when the strength of the received sensing signal is greater than the predetermined threshold. The controller 450 may determine the location of the touch based on a strength or a distribution of sensing signals received by a plurality of sensing channels.

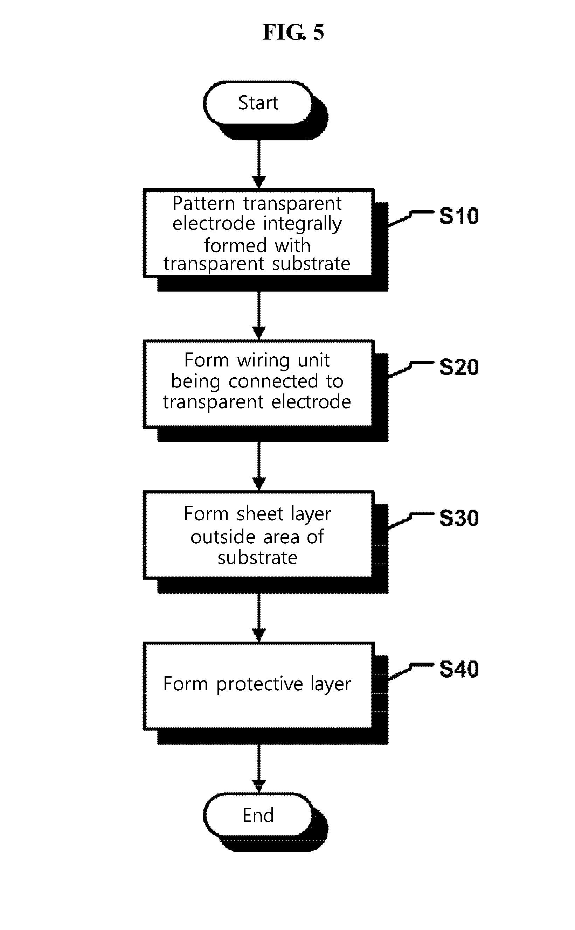

FIG. 5 illustrates a manufacturing method of a touch-sensing panel 100 according to an embodiment of the present invention. Referring to FIG. 5, the manufacturing method of the touch-sensing panel 100 may begin with forming of the sensing electrode 120. The sensing electrode may be integrally formed with the transparent window 110 by directly patterning the sensing electrode 120 on the transparent window 110 in operation S10.

In operation S10, an ITO coated glass having one surface coated with ITO may be used as the transparent window 110. A transparent conductive material, for example ITO and the like, may be integrally formed on one surface of the transparent window 110. The sensing electrode 120 may be integrally formed with the transparent window 110 by forming a transparent conductive layer on the one surface of the transparent window 110 based on a sputtering scheme and the like and patterning the transparent conductive layer in a predetermined shape based on an etching process and the like.

Depending on embodiments, the sensing electrode 120 may be patterned in various shapes, for example, a rectangle, a right-angled triangle, a diamond, a hive, and the like. The sensing electrode 120 of FIG. 1 and FIG. 4 may be formed in a one-layer structure where two right-angled triangles face each other. The sensing electrode 120 of FIG. 1 and FIG. 4 may be formed to be long in a horizontal direction. A first sensing electrode layer is patterned on one surface of the transparent window 110 to determine a first axis component of the touch, for example, an X axis of the touch, an insulating layer is formed on the first sensing electrode, and a second sensing electrode layer is patterned to determine a second axis of the touch, for example, a Y-axis of the touch and thus, the sensing electrode 120 of two-layer structure may be arranged.

Subsequently, the wiring unit 130 that is connected to the sensing electrode 120 may be formed in operation S20. According to an example embodiment, the wiring unit 130 may be formed by printing a conductive paste including Ag with an excellent electricity conductivity based on a silk screen scheme and the like. Sputtering of a metallic material, for example, Mo and the like, may be performed with respect to the one surface of the transparent window 110 where the sensing electrode 120 is formed, and the one surface may be patterned in a desired shape based on a dry etching process or a wet etching process. The wiring unit 130 may be formed outside an area where the sensing electrode 120 is formed, and may not affect a display of the touch-sensing panel 100 and an external form of an electrical device where the touch-sensing panel 100 is applied.

When the silk screen scheme is used, operation S20 where the wiring unit 130 is formed may be performed after operation S10 where the sensing electrode 120 is formed. When the etching scheme is used, a sequence of operation S 10 and operation S20 may be selectively determined based on characteristics of materials of the sensing electrode 120 and the wiring unit 130 and an effect on another process.

The connecting pad 140 may be made of the same material as the wiring unit 130 during the process of forming the wiring unit 130.

The wiring unit 130 may determine a number of touches, the location of a touch, and the like, and may be connected to the controller 450 that controls operations of the touch-sensing panel 100. For example, the circuit substrate 470 that contains the controller 450 may be connected to the touch-sensing panel 100 via an ACF, an ACP, and the like. The controller 450 may receive a sensing signal via the wiring unit 130, and may perform an operation associated with determining of whether the touch occurs, based on the received sensing signal.

Subsequently, the sheet layer 150 may be formed outside the transparent window 110 in operation S30. For example, the sheet layer 150 may be formed outside a surface opposite to one surface of the transparent window 110 where the wiring unit 130 and the sensing electrode 120 are arranged and thus, may prevent the wiring unit 130 from being visually exposed to the outside of the transparent window 110. The sheet layer 150 may be arranged inside the transparent window 110 based on an in-mold injection scheme and the like, and may provide a predetermined decoration effect to the transparent window 110. Operation S30 may be performed after operations S10 and S20. Depending on embodiments, operation S30 may be performed in advance of operations S10 and S20.

The sheet layer 150 may be formed by coating a top surface of the transparent window 110 with an opaque ink and the like. For another example, the sheet layer 150 may be formed by printing the opaque link and the like on an outside at least one surface of a protective film, and attaching the protective film to the top surface of the transparent window 110. When the transparent window 110 made of tempered glass is used, the protective film may be a scattering prevention film that is generally attached to the tempered glass.

The protective layer 160 may be selectively attached to the transparent window 110 to protect the transparent window 110 that is exposed to the outside in operation S40. For example, the surface opposite to the one surface of the transparent window 110 where the sensing electrode 120 may be exposed to the outside of a device that equips the touch-sensing panel 100 to receive a touch from the outside, as illustrated in FIG. 2. Therefore, the protective layer 160 may protect the transparent window 110 from being damaged by an unintentional strong touch by a user or external environment, or from a scratch caused by impact from the outside.

Depending on embodiment the sheet layer 150 and the protective layer 160 may be formed in a single operation. The sheet layer 150 may be directly formed outside the protective layer 160 before the protective layer 160 is attached to the transparent window 110, and the protective layer 160 including the sheet layer 150 may be attached to the transparent window 110 and thus, processes may be simplified.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

## Claims

1. A touch-sensing panel, the panel comprising:
a transparent window including a sensing electrode formed in a predetermined pattern on one surface of the transparent window and receiving a touch via an opposite surface of the one surface; and
a wiring unit being connected to the sensing electrode,
wherein the sensing electrode is integrally formed with the transparent window.

2. The panel of claim 1, further comprising:
a sheet layer being arranged in at least one area of the transparent window.

3. The panel of claim 1, further comprising:
a protective layer being formed on the opposite surface of the transparent window through which the touch is received.

4. The panel of claim 3, wherein the protective layer comprises:
a sheet layer being arranged outside of an area where the sensing electrode is formed,
wherein an area where the sheet layer is arranged corresponds to an area where the wiring unit is arranged, and visually shields the wiring unit.

5. The panel of claim 1, wherein the transparent window comprises:
a window substrate including a transparent conductive material formed on one surface of the window substrate.

6. The panel of claim 5, wherein the window substrate is one of glass or acryl.

7. The panel of claim 1, wherein the wiring unit comprises at least one of a metallic material and a transparent conductive material.

8. A method of manufacturing a touch-sensing panel, the method comprising:
forming a sensing electrode and a wiring unit on one surface of a transparent window; and
forming a sheet layer in at least one area of the transparent window.

9. A method of manufacturing a touch-sensing panel, the method comprising:
forming a sheet layer in at least one area of a transparent window; and
forming a sensing electrode and a wiring unit on one surface of the transparent window.

10. The method of one of claim 8 and claim 9, wherein an opposite surface of the one surface is used for receiving a touch.

11. The method of one of claim 8 and claim 9, further comprising:
forming a protective layer on the opposite surface of the transparent window, the opposite surface facing the one surface where the sensing electrode is formed.

12. The method of one of claim 8 and claim 9, wherein the forming of the sensing electrode and wiring unit comprises forming the sensing electrode and the wiring unit based on a semiconductor fabrication process

13. The method of claim 12, wherein the semiconductor fabrication process comprises at least one of a sputtering process and an etching process.

14. The method of one of claim 8 and claim 9, wherein the forming of the sheet layer comprises:
attaching a predetermined protective film where the sheet layer is formed, to the opposite surface of the one side.

15. The method of one of claim 8 and claim 9, wherein the forming of the sheet layer comprises:
forming the sheet layer based on at least one of a printing scheme, a metalizing scheme, a sputtering scheme, a coating scheme, and an in-mold scheme.

16. The method of claim 14, wherein the protective film is a scattering prevention film comprising a transparent area corresponding to an area where the sensing electrode is formed.
